# EUROPÄISCHE PATENTSCHRIFT

(11) **EP 1 892 438 B1**
(45) Veröffentlichungstag und Bekanntmachung des Hinweises auf die Patenterteilung: **06.01.2010**
(21) Anmeldenummer: 06119216.7
(22) Anmeldetag: 21.08.2006
(51) Int. Cl.: F16H 61/12, F16H 59/70

(54) **Überprüfung einer Fahrtrichtung eines Fahrzeuges**
Control of the travel direction of a vehicle
Contrôle de la direction de déplacement d'un véhicule

(43) Veröffentlichungstag der Anmeldung: 27.02.2008
(73) Patentinhaber: Ford Global Technologies, LLC, Dearborn, MI 48126 (US)
(72) Erfinder: Urhahne, Joseph, 50259 Pulheim (DE)
(74) Vertreter: Drömer, Hans-Carsten

(56) Entgegenhaltungen:
- DE-A1- 10 318 503

## Beschreibung

Die vorliegende Erfindung betrifft ein Verfahren zur Überprüfung eines Rückwärtsgang-Detektors bzw. -Schalters.

Im Allgemeinen wurde bisher der am Getriebe oder der Schaltkulisse angebrachte Rückwärtsgangschalter dazu benutzt, bei Einlegen des Rückwärtsgangs einen Rückfahrscheinwerfer zu aktivieren. Eine Fehlfunktion des Schalters und damit des Rückfahrscheinwerfers war daher bisher vergleichsweise unproblematisch. Mit zunehmender, meist elektronisch geregelter Fahrunterstützung des Fahrers ist es für die damit verbundene elektronische Auswerteinheit von immer größerer Bedeutung, eine Information und vor Allem eine zuverlässige Information darüber zu erhalten, ob ein Rückwärtsgang eingelegt ist oder nicht. Beispielsweise ist die Zuverlässigkeit der Information, ob tatsächlich ein Rückwärtsgang eingelegt ist, insbesondere beim Lösen einer elektronischen Parkhilfe und einer Hang-Anfahrhilfe von entscheidender Bedeutung und kann bei einem falschen Signal verheerende Schäden bis Personenschäden auslösen. Dies ist unbedingt zu vermeiden. Ein redundanter Aufbau des Rückwärtsgangschalters kommt meist aus Platz- und Materialkosten nicht in Frage.

So wird in der DE 103 18 503 ein Verfahren zur Überwachung eines Rückwärtsgangschalters beschrieben, bei dem u. A. mittels Motormoment, eines Längsbeschleunigersensors und eines fahrrichtungsempfindlichen Raddrehzahlsensors der Zustand eines eingelegten Rückwärtsgangs identifiziert wird. Diese Vorgehensweise weist den Nachteil auf, daß zusätzliche Sensoren, wie der fahrtrichtungsempfindliche Raddrehzahlsensor und eine zusätzliche Bestimmung des Motordrehmoments erforderlich sind, was die Durchführung des Verfahrens verteuert. Zudem ist damit eine erhebliche Umkonstruktion bestehender Fahrzeuge verbunden, wodurch die die Fahrsicherheit erhöhenden Fahrunterstützungen, wie die elektronische Parkhilfe und die Hang-Anfahrhilfe für das breite Spektrum der Fahrzeuge aus Kostengründen nicht für eine Grundausstattung eines Fahrzeugs in Frage kommt und nur gegen erheblichen Aufpreis erhältlich ist. Zudem bleibt bei diesem Verfahren vollständig die Problematik der Überprüfung auf nicht ebenem Untergrund unberücksichtigt und ferner, daß im Allgemeinen der Längsbeschleunigungssensor an der Karosserie befestigt ist und daß mit dem Lösen der Bremse in einer Hanglange die federnd gelagerte Karosserie des Autos sich neu ausrichtet, und die sich daraus ergebende Längsbeschleunigung sich auf das Ergebnis des Längsbeschleunigungssensors auswirken kann und damit die Durchführung des Verfahrens erheblich beeinträchtigen, wenn nicht gar verfälschen kann. Ferner ist bei dem offenbarten Verfahren keine Plausibilitätsüberprüfung vorgesehen.

Vor dem zuvor beschriebenen Stand der Technik ist es Aufgabe der vorliegenden Erfindung, ein verbessertes und vergleichsweise preiswert zu realisierendes Verfahren zur Überprüfung eines Rückwärtsgangsschalters sowie eine zugehörige Vorrichtung und ein entsprechendes Fahrzeug bereitzustellen.

Diese Aufgabe wird durch ein Verfahren mit den Merkmalen des Anspruchs 1, durch eine Vorrichtung gemäß Anspruch 8 bzw. ein Fahrzeug gemäß Anspruch 9 gelöst. Vorteilhafte Ausgestaltungen ergeben sich aus den Unteransprüchen.

Das erfindungsgemäße Verfahren dient der Überprüfung (Verifizierung) der Funktionsfähigkeit eines, einen eingelegten Rückwärtsgang detektierenden, Rückwärtsgang-Detektors eines Fahrzeugs unter Auswertung der Aufbaubewegung der Karosserie gegenüber dem Fahrwerk in einer relevanten Anfahrsituation. Bei dem Detektor handelt es sich beispielsweise um einen am Getriebe oder an der Schaltungskulisse angebrachten Schalter, welcher betätigt wird, wenn der Rückwärtsgang eingelegt wird. Bei dem Verfahren wird ein Signal des Rückwärtsgang-Detektors, das angibt, daß der Rückwärtsgang eingelegt ist oder nicht, in einer relevanten Anfahrsituation erfaßt. Eine relevante Anfahrsituation wird dadurch identifiziert, daß die Geschwindigkeit des Fahrzeugs mittels eines Geschwindigkeitssensors erfaßt wird und daß diese (die Geschwindigkeit) in einem Intervall vom Stillstand bis zu einer vorgegebenen Geschwindigkeit des Fahrzeugs liegt. Durch Beschränkung der Geschwindigkeit auf den so angegebenen Anfahrbereich wird sichergestellt, daß nachkommende fahrdynamische und fahrstreckenbedingte Neigungsänderungen das Überwachungsergebnis nicht beeinträchtigen.

Im Allgemeinen wird der vorgegebene Geschwindigkeitswert empirisch und fahrzeugabhängig ermittelt. Es hat sich jedoch in mehreren Versuchen überraschend gezeigt, daß eine obere Grenze von 2km/h und somit eine derartige Definition des Anfahrbereichs besonders geeignet ist, eine zuverlässige und fahrzeugübergreifende Überwachung zu gewährleisten.

Erfindungsgemäß wird der zeitliche Verlauf der Neigung der Karosserie des Fahrzeugs gegenüber dem Fahrwerk, d. h. der sogenannten Aufbauwegung der Karosserie gegenüber dem Fahrwerk erfaßt und in der relevanten Anfahrsituation d.h. in dem Intervall vom Stillstand bis zur vorgegebenen Geschwindigkeit aufsummiert oder integriert. Es obliegt dem Fachmann dabei, eine geeignete Abtastrate für die Bestimmung der Meßwerte im zeitlichen Verlauf zu wählen. Der erhaltene Wert der Integration bzw. Summation wird wenigstens dem Vorzeichen nach und optional mit einem vorgegebenen Wert vergleichend ausgewertet. Es wird dem Fachmann klar sein, daß sich je nach Richtung der Längsbeschleunigung, d. h. bei Vorwärts- oder Rückwärtsbeschleunigung ein anderes Vorzeichen der Beschleunigung ergibt, wobei die Festlegung dessen was positiv oder negativ ist, lediglich eine Frage der Konvention ist. Der optionale Vergleichswert wird im Allgemeinen Fahrzeug- oder Fahrwerk-spezifisch vorgegeben. Anhand der Auswertung wird ein Vorliegen oder Nicht-Vorliegen einer Rückwärtsfahrtsituation identifiziert, indem beispielsweise überprüft wird, ob ein erwartetes Vorzeichen des Signals des Längsbeschleunigungssensors und/oder der vorgegebene Wert über- bzw. unterschritten wird. Dieses Identifikationsergebnis wird mit dem Signal des Rückwärtsgang-Detektors verglichen und bei einer Diskrepanz wird als Ergebnis des Vergleichs ein Fehler ausgegeben und/oder gespeichert. Das Verfahren zeichnet sich dadurch aus, daß im Vergleich zum Stand der Technik eine einfach und durch vergleichsweise einfache Mittel, d. h. Sensoren, eine Überprüfung der Funktionsfähigkeit des Rückwärtsgang-Detektors erfolgt. Zudem hat sich das Verfahren als besonders zuverlässig erwiesen.

Bei einer weiteren, vorteilhaften Ausführungsform des erfindungsgemäßen Verfahrens wird dann eine relevante Anfahrsituation zusätzlich dadurch identifiziert, daß eine ebene Ausrichtung des Fahrzeugs beim Stillstand vorliegt. D. h. eine relevante Anfahrsituation liegt dann vor, wenn neben der Bedingung, daß die Geschwindigkeit im Bereich des Stillstand bis zum vorgegebenen Geschwindigkeitswert liegt, die Bedingung erfüllt ist, daß mittels eines Neigungssensor eine ebene Ausrichtung des Fahrzeugs beim Stillstand ermittelt wird. Es hat sich in mehreren Versuchen gezeigt, daß dann bevorzugt eine ebene Ausrichtung vorliegt, wenn die durch den Neigungssensor bestimmte Neigung des Fahrzeugs im Bereich zwischen -2% und 2% beträgt. Dadurch, daß bei dieser Ausgestaltung eine Anfahrsituation nur dann als relevant erachtet wird, wenn das Fahrzeug nicht auf einem geneigten Untergrund steht, kann die Zuverlässigkeit des erfindungsgemäßen Verfahrens gesteigert werden, da ansonsten bei einer Neigung des Fahrzeugs im Stillstand die durch das Anfahren verursachte Längsbeschleunigung in bestimmten Situationen, beispielsweise durch gegenläufige Effekte, wie der nachfolgende Ausrichtvorgang, so minimal ausfallen kann, daß sie nicht ausgewertet werden kann. Somit wird durch die Beschränkung der Überprüfung des Detektors auf diese Anfahrsituation die Genauigkeit und Zuverlässigkeit des erfindungsgemäßen Verfahrens zusätzlich gesteigert. Beispielsweise handelt es sich bei dem zuvor erwähnten Neigungssensor um einen Längsbeschleunigungssensor. Dadurch kann vorteilhaft die zur Durchführung des erfindungsgemäßen Verfahrens sensortechnische Ausrüstung reduziert werden. Beispielsweise werden derartige Sensoren in Allradfahrzeugen eingesetzt.

Gemäß einer weiteren vorteilhaften Ausführungsform wird dann eine relevante Anfahrsituation zusätzlich dadurch identifiziert, daß der Rückwärtsgang-Detektor einen eingelegten Rückwärtsgang signalisiert und der Neigungssensor bzw. der Längsbeschleunigungssensor eine in Vorwärtsrichtung des Fahrzeugs abfallende Neigung des Fahrzeugs signalisiert oder daß der Rückwärtsgang-Detektor keinen eingelegten Rückwärtsgang signalisiert und der Neigungssensor bzw. der Längsbeschleunigungssensor eine in Vorwärtsrichtung des Fahrzeugs ansteigende Neigung des Fahrzeugs signalisiert. Dadurch, daß bei dieser Ausgestaltung eine Anfahrsituation nur dann als relevant erachtet wird und überprüft werden soll, wenn das Fahrzeug im Stillstand nach vorne ansteigend geneigt und der Detektor keinen Rückwärtsgang anzeigt oder wenn das Fahrzeug nach vorne abfallend geneigt ist und das Fahrzeug gemäß dem Detektor den Rückwärtsgang eingelegt hat kann die Zuverlässigkeit des erfindungsgemäßen Verfahrens ebenfalls gesteigert werden, da gerade solche Anfahrsituation nicht als relevant erachtet werden, bei denen die Neigung des Fahrzeugs im Stillstand die durch das Anfahren verursachte Längsbeschleunigung so einschränken oder beeinflussen, daß diese so unausgeprägt ist, daß sie nicht oder nur schlecht vom Sensor erfaßt bzw. danach ausgewertet werden kann. Somit wird durch die Beschränkung der Überprüfung des Detektors auf diese relevanten Anfahrsituationen die Genauigkeit und Zuverlässigkeit des erfindungsgemäßen Verfahrens zusätzlich gesteigert. Bevorzugt wird dann das Vorhandensein einer Neigung des Fahrzeugs im Stillstand vorausgesetzt, wenn der durch den Neigungssensor gemessene Betrag der Abweichung von der ebenen Ausrichtung des Fahrzeugs mehr als 2%, beispielsweise 5%, beträgt. Bevorzugt werden diese bei Neigung des Fahrzeugs als relevant erachteten Anfahrsituationen und die bei eben ausgerichtetem Fahrzeug als relevant erachteten Anfahrsituation jeweils zur Überprüfung des Detektors verwendet, um die Genauigkeit des Verfahrens und die Häufigkeit der Überprüfung aus sicherheitsrelevanten Überlegungen zu erhöhen.

Die Geschwindigkeit wird in einer vorteilhaften Ausführungsform mittels eines richtungsunempfindlichen Geschwindigkeitssensors ausgewertet. Da richtungsunempfindliche Geschwindigkeitssensoren wesentlich preisgünstiger sind und im Allgemeinen zur Erzeugung des Tachosignals verwendet werden und somit zur Grundausstattung eines Fahrzeugs gehören, kann das erfindungsgemäße Verfahren preiswert realisiert werden.

Bei einer weiteren vorteilhaften Ausführungsform wird eine Bremswirkung des Fahrzeugs mittels Sensor erfaßt und der Meßwert der Längsbeschleunigung erst nach dem Aussetzen der Bremswirkung und Abschluß eines dadurch bewirkten Ausricht- bzw. Einschwingvorgangs ermittelt. Dadurch wird verhindert, daß der beim Lösen der Bremse aufgrund der am Fahrwerk gefedert gelagerten Karosserie auftretende Ausricht- bzw. Einschwingvorgang der Karosserie gegenüber dem Fahrwerk das Meßergebnis des Neigungssensors beeinträchtigt. Dies wird bevorzugt nur bei einer geneigten Ausrichtung des Fahrzeugs berücksichtigt, d. h. lediglich dann, wenn eine Neigung des Fahrzeugs detektiert wird. Die Bremswirkung wird beispielsweise mittels eines Bremsdrucksensors oder eines Bremspedalschalters überwacht. Die Auswirkung des die Genauigkeit und Zuverlässigkeit des erfindungsgemäßen Verfahrens beeinträchtigenden Ausricht- bzw. Einschwingvorgangs kann so bei der Bestimmung des für die Beurteilung des Detektors wesentlichen Neigungsverlaufs eliminiert werden.

Gemäß einer weiteren vorteilhaften Ausführungsform wird im Stillstand, bevorzugt nach dem Ausricht- bzw. Einschwingvorgang, die Neigung bestimmt und als Offsetwert zur näherungsweisen Bestimmung der Neigung der Karosserie gegenüber dem Fahrwerk des Fahrzeugs verwendet, d. h. die Neigung des Fahrzeugs wird vor der Aufbaubewegung der Karosserie gegenüber dem Fahrwerk bestimmt, um die Neigung der Fahrbahn zu erhalten. Bei der nachfolgenden Integration bzw. Summation wird die gemessene Neigung um diesen Offsetwert korrigiert, um somit näherungsweise die Neigung zwischen Karosserie und Fahrwerk zu bestimmen. Damit kann die Neigung der Karosserie gegenüber dem Fahrwerk, d. h. die relative Neigung vergleichsweise einfach bestimmt werden, ohne daß beispielsweise jeweils ein Neigungssensor am Fahrwerk oder an der Karosserie vorzusehen ist. In einer Ausgestaltung wird der Ausricht- und Einschwingvorgang nach einem empirisch ermittelten Zeitablauf, beispielsweise von 200 ms, nach dem Lösen der Bremse für abgeschlossen erachtet und zu diesem Zeitpunkt der Offsetwert bestimmt. Alternativ kann der Offsetwert in einem entsprechendem Zeitintervall nach Abschluß des Einschwingvorgangs und vor dem Einsetzen der Aufbaubewegung erfaßt und gemittelt werden, wobei die Grenzen empirisch fahrzeugspezifisch zu bestimmen sind.

Bei einer weiteren vorteilhaften Ausführungsform werden zur Falsifikation mehrere relevante Anfahrsituationen ausgewertet und erst bei Überschreiten einer vorbestimmten Häufigkeit der Diskrepanz beim Vergleich zwischen dem Signal des Detektors und dem ermittelten Vorhandensein bzw. NichtVorhandensein einer Rückwärtsfahrtsituation ein Fehler ausgegeben und/oder gespeichert. Dadurch kann die Zuverlässigkeit der Überwachung gesteigert werden. Es obliegt dem Fachmann, die Anzahl der für eine Fehlerausgabe erforderlichen Häufigkeit anhand sicherheitsrelevanter Gesichtspunkte vorzugeben. Der Fehler, gegebenenfalls mit der Häufigkeit der Diskrepanz, kann in einem nichtflüchtigen Speicher hinterlegt sein, der auch nach Abschalten der Zündung und Abklemmen der Batterie des Fahrzeugs seinen Inhalt beibehält. In einer weiteren Ausgestaltung wird die Anzahl, mit der es zur Diskrepanz gekommen ist, immer dann um eins reduziert, wenn es zu einer Übereinstimmung zwischen dem Signal des Detektors und dem Auswertergebnis, d. h. zu einer Bestätigung der Funktion des Detektors, gekommen ist.

Die Erfindung betrifft ferner eine Vorrichtung zur Überprüfung der Funktionsfähigkeit eines, einen eingelegten Rückwärtsgang detektierenden, Rückwärtsgang-Detektors mit einer Auswerteinheit. Dabei ist die Auswerteinheit in der Lage, das Verfahren in den zuvor beschriebenen Ausführungsformen und den damit verbundenen Vorteilen durchzuführen.

Außerdem betrifft die Erfindung ein Fahrzeug mit einem Geschwindigkeitssensor, einem Neigungssensor oder Längsbeschleunigungssensor und einer Vorrichtung mit einer Auswerteinheit zur Durchführung des zuvor beschriebenen Verfahrens. Bevorzugt handelt es sich aus den zuvor bereits erwähnten Gründen bei dem Geschwindigkeitssensor um einen richtungsunempfindlichen Geschwindigkeitssensor. Optional kann ein Sensor zur Überwachung der Bremswirkung aus den zuvor erläuterten Gründen vorgesehen sein; bevorzugt handelt es sich um einen Bremsdrucksensor oder um ein Bremspedalschalter.

Bei dem zuvor beschriebenen Fahrzeug handelt es sich bevorzugt um ein Fahrzeug mit einer elektronischen Parkhilfe und/oder einer Hang-Anfahrhilfe. Bei dieser Art von elektronisch geregelter Fahrunterstützung des Fahrers ist das erfindungsgemäße Verfahren von großem Vorteil, da die mit den vorgenannten Fahrunterstützungen jeweils zusammenhängende Auswerteinheit eine der benötigten Informationen aus dem Rückwärtsgangdetektor erhält. Damit ist deren ordnungsgemäße Funktion nur dann sichergestellt, wenn dieser Detektor zuverlässig funktioniert. Wie zuvor beschrieben, kann durch das erfindungsgemäße Verfahren die Funktion des Detektors sehr zuverlässig überwacht werden. Zudem kann ein vom erfindungsgemäßen Verfahren ausgegebener Fehler dazu genutzt werden, die zuvor erwähnten Fahrunterstützungen in einen Notbetrieb umzuschalten, um beim Ausfall des Rückwärtsgangdetektors durch eine Fehlfunktion der jeweiligen Fahrunterstützung die Gefährdung für Personen zu reduzieren.

Weitere vorteilhafte Ausgestaltungen sind in den Unteransprüchen und der folgenden Figurenbeschreibung offenbart, ohne die Erfindung darauf einzuschränken. Es zeigen:
- Figur 1: in Diagrammform einen typischen Verlauf der Signale der jeweiligen Sensoren bei einer ebenen Ausrichtung der Fahrbahn und bei einer Rückwärtsfahrt,
- Figur 2: in Diagrammform einen typischen Verlauf der Signale der jeweiligen Sensoren bei einer ebenen Ausrichtung der Fahrbahn und bei einer Vorwärtsfahrt,
- Figur 3: in Diagrammform einen typischen Verlauf der Signale der jeweiligen Sensoren bei einer geneigten, in Vorwärtsrichtung des Fahrzeugs abfallenden Ausrichtung (-5%) der Fahrbahn und bei einer Rückwärtsfahrt die Steigung hinauf (d.h. Rückwärtsgang eingelegt), und
- Figur 4: in Diagrammform einen typischen Verlauf der Signale der jeweiligen Sensoren bei einer geneigten, in Vorwärtsrichtung des Fahrzeugs ansteigenden Ausrichtung (+5%) der Fahrbahn und bei einer Vorwärtsfahrt die Steigung hinauf (d.h. Rückwärtsgang nicht eingelegt).

Die Figuren stellen die Anfahrsituationen dar, die zur Überwachung des Rückwärtsgangdetektors in einer erfindungsgemäßen Ausführungsform des Verfahrens als relevant erachtet werden. In allen Figuren entspricht das Bezugszeichen 1 dem zeitlichen Verlauf des Signals des Geschwindigkeitssensors, das Bezugszeichen 2 dem zeitlichen Verlauf des Signals des Bremsdrucksensors, das Bezugszeichen 3 dem zeitlichen Verlauf des Signals des Kupplungsstellungssensors, das Bezugszeichen 4 dem zeitlichen Verlauf des Signals des Gaspedalsignalstellungssensors und das Bezugszeichen 5 dem zeitlichen Verlauf des Signals des Neigungssensors. Einige der Verläufe dienen nur der Veranschaulichung und sind nicht wesentlich für die Durchführung des erfindungsgemäßen Verfahrens.

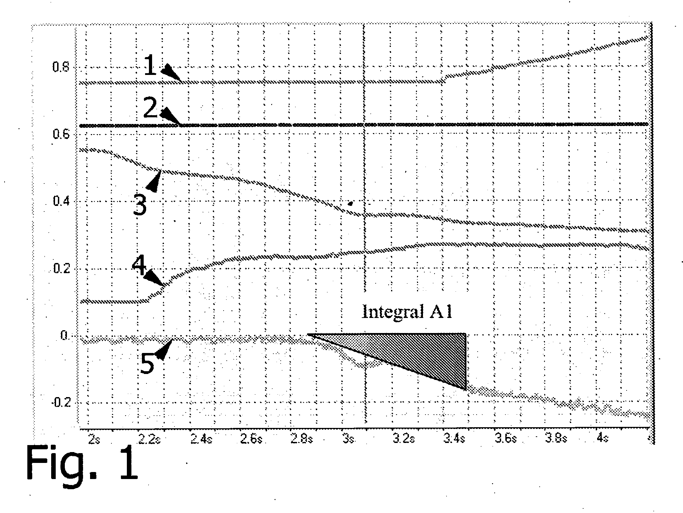

Das Diagramm der Figur 1 beschreibt die Situation, daß eine in Rückwärtsrichtung gerichtete Anfahrsituation auf ebener Fahrbahn (Betrag der Neigung kleiner 2%) vorgenommen wird. Das Intergral A1 nimmt einen Wert unter einem negativen Grenzwert an, und die Neigung verbleibt negativ bis zu einer Geschwindigkeit von 2km/h. Die relevante Anfahrsituation wird durch das Integral A1 angedeutet. Bei entsprechendem Signal des Rückwärtsgang-Detektors wird dessen Funktion bestätigt, ansonsten ein Fehler ausgegeben.

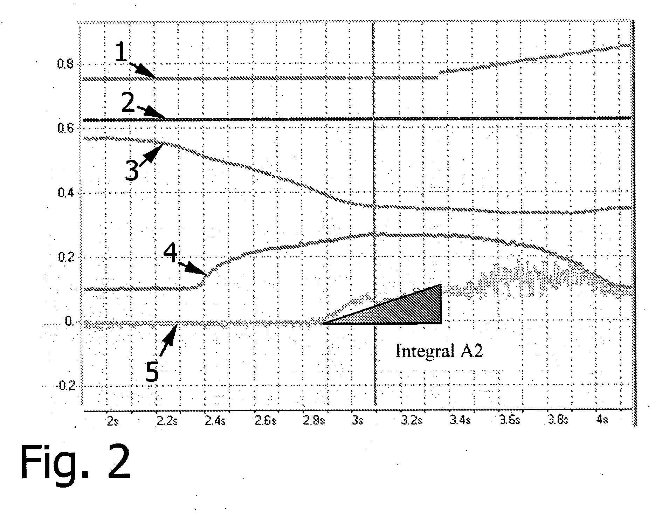

Das Diagramm der Figur 2 beschreibt die Situation, daß eine in Vorwärtsrichtung gerichtete Anfahrsituation auf ebener Fahrbahn (Betrag der Neigung kleiner 2%) vorgenommen wird. Das Intergral A2 nimmt einen Wert über einem positiven Grenzwert an, und die Neigung verbleibt positiv bis zu einer Geschwindigkeit von 2km/h. Die relevante Anfahrsituation wird durch das Integral A2 angedeutet. Bei entsprechendem Signal des Rückwärtsgang-Detektors wird dessen Funktion bestätigt, ansonsten ein Fehler ausgegeben.

Die vorhergehenden Situationen werden von den folgenden Situationen durch eine Neigungsmessung im Stillstand differenziert.

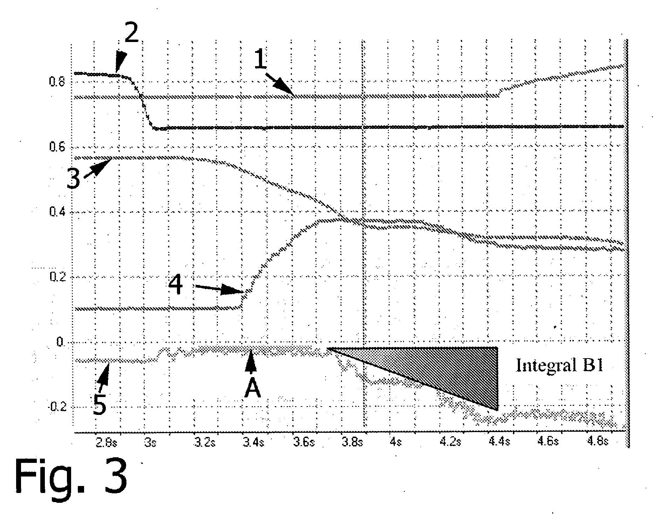

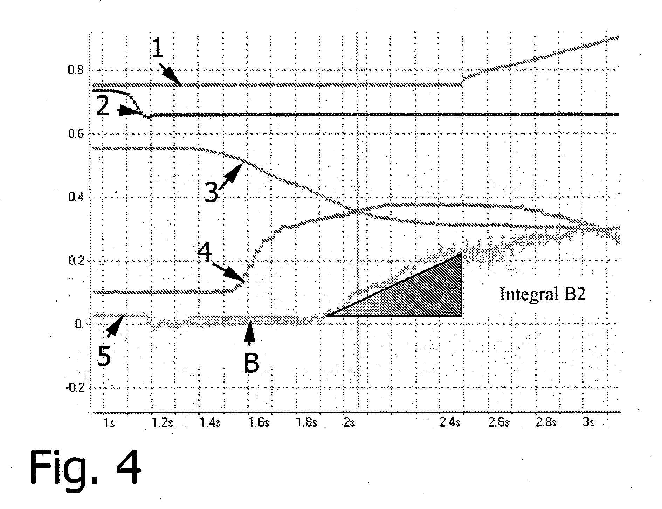

Die Diagramme der Figuren 3 und 4 beschreiben zwei weitere für die effiziente Überwachung als relevant erachtete Anfahrsituationen. Das Diagramm der Figur 3 zeigt nämlich die Situation, daß eine in Vorwärtsrichtung des Fahrzeugs abfallende Fahrbahn (-5%) vorliegt und der Rückwärtsgang eingelegt ist. D.h. in dieser Situation wird überprüft, ob das (positive) Signal des Detektors sich mit den zu erwartenden Meßergebnissen deckt. Nach dem Lösen der Bremse (starker Abfall im Verlauf des Signals 2) wird nach Abschluß des Einschwingvorgangs, der nicht berücksichtigt wird, ein Verlauf mit im Mittel nahezu konstantem Verlauf der Neigung im Bereich A detektiert. Dieser Bereich kann aufgrund der erst später einsetzenden Aufbaubewegung der Karosserie und dem abgeschlossenen Einschwingvorgang dazu genutzt werden, aus dem gemessenen Neigungswert, die Neigung des Fahrwerks bzw. der Fahrbahn zu ermitteln. Im gezeigten Fall wird der Wert (hier die -5%) in etwa 200 ms nach dem Lösen der Bremse bestimmt und wird als Offsetwert bei der weiteren Bestimmung der Neigung verwendet, um aus dem gemessenen Neigungswert durch Korrektur um den Offsetwert die ungefähre (relative) Neigung zwischen der Karosserie und dem Fahrwerk zu erhalten. Mit Beginn der eigentlichen Aufbaubewegung zwischen Karosserie und Fahrwerk fällt die Neigung stark ab.

Das Integral B1 der Neigung über die Zeit vom Zeitpunkt an dem der Offsetwert bestimmt wurde, bis zum Zeitpunkt, an dem die Geschwindigkeit des Fahrzeugs 2km/h beträgt, wird berechnet. Das Integral B1 ist unter einem negativen Grenzwert und bleibt negativ. Somit kann beim Signal des Detektors, daß ein Rückwärtsgang eingelegt ist, dessen Funktion bestätigt werden. Bei Diskrepanz wird ein Fehler ausgegeben,

Das Diagramm der Figur 4 zeigt die Situation, daß eine in Vorwärtsrichtung des Fahrzeugs ansteigende Ausrichtung (+5%) der Fahrbahn vorliegt und kein Rückwärtsgang sondern der Vorwärtsgang eingelegt ist. D.h. in dieser Situation wird überprüft, ob das (negative = kein Rückwärtsgang) Signal des Detektors sich mit den zu erwartenden Meßergebnissen deckt. Nach dem Lösen der Bremse (starker Abfall im Verlauf des Signals 2) wird nach Abschluß des Einschwingvorgangs, der nicht berücksichtigt wird, ein Verlauf mit im Mittel nahezu konstantem Verlauf der Neigung im Bereich B detektiert. Dieser Bereich kann wiederum aufgrund der erst später einsetzenden Aufbaubewegung der Karosserie und dem abgeschlossenen Einschwingvorgang dazu genutzt werden, aus dem gemessenen Neigungswert die Neigung des Fahrwerks bzw. der Fahrbahn zu ermitteln. Im gezeigten Fall wird der Wert (hier die + 5%) in etwa 200 ms nach dem Lösen der Bremse bestimmt und wird als Offsetwert bei der weiteren Bestimmung der Neigung verwendet, um aus dem gemessenen Neigungswert durch Korrektur um den Offsetwert die ungefähre (relative) Neigung zwischen der Karosserie und dem Fahrwerk zu erhalten. Mit Beginn der eigentlichen Aufbaubewegung zwischen Karosserie und Fahrwerk nimmt die Neigung stark zu. Das Integral B2 der Neigung über die Zeit vom Zeitpunkt, an dem der Offsetwert bestimmt wurde, bis zum Zeitpunkt, an dem die Geschwindigkeit des Fahrzeugs 2km/h beträgt, wird berechnet. Das Integral B2 ist über einem positiven Grenzwert und bleibt positiv. Somit kann beim Signal des Detektors, daß kein Rückwärtsgang eingelegt ist, dessen Funktion bestätigt werden. Bei Diskrepanz wird ein Fehler ausgegeben.

## Patentansprüche

1. Verfahren zur Überprüfung der Funktionsfähigkeit eines, einen eingelegten Rückwärtsgang detektierenden, Rückwärtsgang-Detektors eines Fahrzeugs, wobei ein Signal des Rückwärtsgang-Detektors, das angibt, daß der Rückwärtsgang eingelegt ist oder nicht, in einer relevanten Anfahrsituation erfaßt wird, wobei die relevante Anfahrsituation, **dadurch** identifiziert wird, daß die Geschwindigkeit des Fahrzeugs mittels eines Geschwindigkeitssensors erfaßt wird und daß diese in einem Intervall vom Stillstand bis zu einer vorgegebenen Geschwindigkeit, bevorzugt bei 2km/h, des Fahrzeugs liegt; wobei während der als relevant identifizierten Anfahrsituation der zeitliche Verlauf der Neigung einer Karosserie des Fahrzeugs gegenüber einem Fahrwerk des Fahrzeugs, beispielsweise mittels eines Neigungssensors, erfaßt und aufsummiert oder integriert wird und der dabei erhaltene Wert wenigstens dem Vorzeichen nach und optional mit einem vorgegebenen Wert vergleichend ausgewertet wird und wobei anhand der Auswertung ein Vorliegen oder Nicht-Vorliegen einer Rückwärtsfahrtsituation identifiziert und dieses Identifikationsergebnis mit dem Signal des Rückwärtsgang-Detektors verglichen wird, wobei bei einer Diskrepanz beim Vergleich ein Fehler ausgegeben und/oder gespeichert wird.

2. Verfahren nach Anspruch 1, wobei dann eine relevante Anfahrsituation zusätzlich **dadurch** identifiziert wird, daß der Neigungssensor eine ebene Ausrichtung des Fahrzeugs beim Stillstand signalisiert.

3. Verfahren nach Anspruch 1 oder 2, wobei dann eine relevante Anfahrsituation zusätzlich **dadurch** identifiziert wird, daß der Rückwärtsgang-Detektor einen eingelegten Rückwärtsgang signalisiert und eine in Vorwärtsrichtung des Fahrzeugs abfallenden Neigung des Fahrzeugs im Stillstand signalisiert oder daß der Rückwärtsgang-Detektor keinen eingelegten Rückwärtsgang signalisiert und der Neigungssensor eine in Vorwärtsrichtung des Fahrzeugs ansteigende Neigung des Fahrzeugs im Stillstand signalisiert.

4. Verfahren nach einem der vorhergehenden Ansprüche, wobei die Geschwindigkeit mittels eines richtungsunempfindlichen Geschwindigkeitssensors erfaßt wird.

5. Verfahren nach einem der vorhergehenden Ansprüche, wobei eine Bremswirkung des Fahrzeugs mittels Sensor erfaßt wird, und der zeitliche Verlauf der Neigung erst nach dem Aussetzen der Bremswirkung und dem Abschluß eines **dadurch** bewirkten Ausricht- bzw. Einschwingvorgangs des Fahrzeugs ermittelt wird.

6. Verfahren nach einem der vorhergehenden Ansprüche, wobei im Stillstand, bevorzugt nach dem Ausricht- bzw. Einschwingvorgang, die Neigung bestimmt wird und als Offsetwert zur näherungsweisen Bestimmung der Neigung der Karosserie gegenüber dem Fahrwerk des Fahrzeugs verwendet wird.

7. Verfahren nach einem der vorhergehenden Ansprüche, wobei zur Falsifikation mehrere relevante Anfahrsituationen ausgewertet werden und erst bei Überschreiten einer vorbestimmten Häufigkeit der Diskrepanz ein Fehler ausgegeben und/oder gespeichert wird.

8. Vorrichtung zur Überprüfung der Funktionsfähigkeit eines, einen eingelegten Rückwärtsgang detektierenden, Rückwärtsgang-Detektors mit einer Auswerteinheit, **dadurch gekennzeichnet, dass** diese ausgelegt ist, das Verfahren gemäß einer der vorhergehenden Ansprüche durchzuführen.

9. Fahrzeug mit einem Geschwindigkeitssensor, bevorzugt richtungsunempfindlichen Geschwindigkeitssensor, einem Neigungs- oder Längsbeschleunigungssensor, und optional einem Sensor zur Überwachung der Bremswirkung, bevorzugt einem Bremsdrucksensor oder Bremspedalschalter, und mit einer Vorrichtung gemäß dem vorhergehenden Anspruch.

10. Fahrzeug nach Anspruch 9 mit einer elektronischen Parkhilfe und/oder einer Hang-Anfahrhilfe.

## Claims

1. Method for checking the functional capability of a reverse gearspeed detector, which detects an engaged reverse gearspeed, of a vehicle, wherein a signal of the reverse gearspeed detector which indicates whether or not the reverse gearspeed is engaged is sensed in a relevant starting situation, wherein the relevant starting situation is identified by virtue of the fact that the speed of the vehicle is sensed by means of a speed sensor, and that this speed is in an interval from the stationary state up to a predefined speed, preferably 2 km/h, of the vehicle, wherein during the starting situation which is identified as relevant the time profile of the inclination of a bodywork of the vehicle with respect to a chassis of the vehicle is sensed, for example by means of an inclination sensor, and summed or integrated, and the value obtained here is evaluated by comparison at least according to the sign and optionally by comparison with a predefined value, and wherein on the basis of the evaluation presence or absence of a reversing situation is identified and this identification result is compared with the signal of the reverse gearspeed detector, wherein when there is a discrepancy in the comparison a fault is output and/or stored.

2. Method according to Claim 1, wherein a relevant starting situation is then additionally identified by virtue of the fact that the inclination sensor signals a level orientation of the vehicle in the stationary state.

3. Method according to Claim 1 or 2, wherein a relevant starting situation is then additionally identified by virtue of the fact that the reverse gearspeed detector signals an engaged reverse gearspeed and signals an inclination of the vehicle in the stationary state which drops away in the forward direction of the vehicle, or by virtue of the fact that the reverse gearspeed detector does not signal an engaged reverse gearspeed, and the inclination sensor signals an inclination of the vehicle in the stationary state which rises in the forward direction of the vehicle.

4. Method according to one of the preceding claims, wherein the speed is sensed by means of a speed sensor which is insensitive to direction.

5. Method according to one of the preceding claims, wherein a braking effect of the vehicle is sensed by means of a sensor, and the time profile of the inclination is not determined until after the braking effect finishes and an orientation process or transient recovery process of the vehicle which is brought about as a result is concluded.

6. Method according to one of the preceding claims, wherein in the stationary state the inclination is preferably determined after the orientation process or transient recovery process and is used as an offset value for approximately determining the inclination of the vehicle bodywork with respect to the chassis of the vehicle.

7. Method according to one of the preceding claims, wherein for the purpose of falsification a plurality of relevant starting situations are evaluated and a fault is not output and/or stored until a predetermined frequency of the discrepancy is exceeded.

8. Device for checking the functional capability of a reverse gearspeed detector, which detects an engaged reverse gearspeed, with an evaluation unit, **characterized in that** said device is designed to carry out the method according to one of the preceding claims.

9. Vehicle having a speed sensor, preferably a speed sensor which is insensitive to direction, and an inclination switch or brake pedal switch, and having a device according to the preceding claim.

10. Vehicle according to Claim 9, having an electronic parking aid and/or a hill start aid.

## Revendications

1. Procédé de contrôle de la fonctionnalité d'un détecteur de marche arrière d'un véhicule, détectant une marche arrière enclenchée, un signal du détecteur de marche arrière, qui indique que la marche arrière est enclenchée ou non, étant détecté dans une situation de démarrage pertinente, la situation de démarrage pertinente étant identifiée par le fait que la vitesse du véhicule est détectée au moyen d'un capteur de vitesse et en ce que celle-ci se situe dans un intervalle allant de l'arrêt à une vitesse du véhicule prédéterminée, de préférence de 2 km/h ; pendant la situation de démarrage identifiée comme pertinente, l'allure dans le temps de l'inclinaison d'une carrosserie du véhicule par rapport à un châssis du véhicule étant détectée par exemple au moyen d'un capteur d'inclinaison, et étant additionnée ou intégrée et la valeur obtenue en l'occurrence étant analysée en terme de son signe et éventuellement avec une comparaison avec une valeur prédéterminée, et une présence ou absence d'une situation de conduite en marche arrière étant identifiée au moyen de l'analyse et ce résultat de l'identification étant comparé au signal du détecteur de marche arrière, et en cas d'écart lors de la comparaison, une erreur étant émise et/ou mémorisée.

2. Procédé selon la revendication 1, dans lequel une situation de démarrage pertinente est alors en outre identifiée par le fait que le capteur d'inclinaison signale une orientation plane du véhicule à l'arrêt.

3. Procédé selon la revendication 1 ou 2, dans lequel une situation de démarrage pertinente est alors en outre identifiée par le fait que le détecteur de marche arrière signale une vitesse de marche arrière enclenchée et une inclinaison du véhicule vers le bas dans la direction avant du véhicule à l'arrêt, ou en ce que le détecteur de marche arrière ne signale pas de marche arrière enclenchée et le capteur d'inclinaison signale une inclinaison du véhicule vers le haut dans le sens de marche avant du véhicule à l'arrêt.

4. Procédé selon l'une quelconque des revendications précédentes, dans lequel la vitesse est détectée au moyen d'un capteur de vitesse insensible à la direction.

5. Procédé selon l'une quelconque des revendications précédentes, dans lequel une action de freinage du véhicule est détectée au moyen d'un capteur et l'allure dans le temps de l'inclinaison est détectée seulement après l'arrêt de l'action de freinage et la terminaison d'une opération de direction ou de braquage du véhicule provoquée de ce fait.

6. Procédé selon l'une quelconque des revendications précédentes, dans lequel, à l'arrêt, de préférence après l'opération de direction ou de braquage, l'inclinaison est déterminée et l'on utilise comme valeur de départ pour une détermination approximative de l'inclinaison de la carrosserie par rapport au châssis du véhicule.

7. Procédé selon l'une quelconque des revendications précédentes, dans lequel, en vue d'une falsification, plusieurs situations de démarrage pertinentes sont analysées et une erreur est seulement émise et/ou mémorisée lors d'un dépassement d'une fréquence prédéterminée de l'écart.

8. Dispositif pour contrôler la fonctionnalité d'un détecteur de marche arrière détectant une vitesse de marche arrière enclenchée, comprenant une unité d'analyse, **caractérisé en ce que** celui-ci est conçu pour mettre en oeuvre le procédé selon l'une quelconque des revendications précédentes.

9. Véhicule comprenant un capteur de vitesse, de préférence un capteur de vitesse insensible à la direction, un commutateur d'inclinaison ou de pédale de frein, et comprenant un dispositif selon la revendication précédente.

10. Véhicule selon la revendication 9, comprenant un auxiliaire de stationnement électronique et/ou un auxiliaire de démarrage en pente.
